# EUROPÄISCHE PATENTSCHRIFT

(11) **EP 2 795 085 B1**
(45) Veröffentlichungstag und Bekanntmachung des Hinweises auf die Patenterteilung: **01.06.2016**
(21) Anmeldenummer: 12801557.5
(22) Anmeldetag: 12.12.2012
(51) Int. Cl.: F02D 19/02, F02D 19/06, F02M 21/02

(54) **VERFAHREN UND VORRICHTUNG ZUM STEUERN DER KRAFTSTOFFZUFUHR EINER MIT FLÜSSIGGAS BETRIEBENEN VERBRENNUNGSKRAFTMASCHINE**
METHOD AND DEVICE FOR CONTROLLING THE FUEL SUPPLY OF AN INTERNAL COMBUSTION ENGINE OPERATED WITH LIQUEFIED GAS
PROCÉDÉ ET DISPOSITIF PERMETTANT DE COMMANDER L'AMENÉE DE CARBURANT À UN MOTEUR À COMBUSTION INTERNE FONCTIONNANT AU GPL

(30) Priorität: 20.12.2011 DE 102011089254
(43) Veröffentlichungstag der Anmeldung: 29.10.2014
(73) Patentinhaber: Continental Automotive GmbH, 30165 Hannover (DE)
(72) Erfinder: SCHÜLE, Harry, 92431 Neunburg v. Wald (DE); STUTIKA, Markus, 93053 Regensburg (DE)
(86) Internationale Anmeldenummer: PCT/EP2012/075263
(87) Internationale Veröffentlichungsnummer: WO 2013/092347

(56) Entgegenhaltungen:
- EP-A1- 1 541 858
- WO-A1-2010/077140
- DE-A1-102007 028 816
- DE-A1-102008 024 561
- DE-A1-102008 054 191
- JP-A- 2008 045 463
- US-A1- 2011 139 122

## Beschreibung

Die Erfindung geht von einem Verfahren zur Steuerung der Direkteinspritzung von Flüssiggas in einen Zylinder einer Verbrennungskraftmaschine nach den Oberbegriffen der unabhängigen Patentansprüche aus.

Es ist schon bekannt, dass zum Antrieb von Kraftfahrzeugen Verbrennungskraftmaschinen verwendet werden, die wie Ottomotoren nach dem Viertaktprinzip arbeiten, aber an Stelle von Benzin mit Autogas betrieben werden. Als Autogas wird insbesondere Flüssiggas auf Petroleumbasis (LPG, Liquefied Petroleum Gas) verwendet. Dabei gibt es monovalente und bivalente Systeme. Im ersten Fall wird als Kraftstoff ausschließlich Flüssiggas verwendet, im zweiten Fall ist neben dem Flüssiggas als Kraftstoff eine weitere Kraftstoffart, in der Regel Otto-Kraftstoff vorhanden. In modernen Kraftfahrzeugen wird dabei das Autogas in flüssigem Zustand direkt in den oder die Brennräume des Zylinders der Verbrennungskraftmaschine eingespritzt. Die direkte Einspritzung des umweltfreundlichen Autogases führt zu einer deutlichen CO2 Reduktion und darüber hinaus zu einer Reduzierung der Partikelemissionen.

Bei einem Betrieb eines solchen System mit Flüssiggas kann es aufgrund der unterschiedlichen chemischen/physikalischen Eigenschaften von Otto-Kraftstoffen und Flüssiggas (Autogas) zu Problemen kommen.

Autogas ist in der Regel ein Gemisch aus Propan und Butan und ist unter normalen Bedingungen, d.h. bei Atmosphärendruck und Raumtemperatur gasförmig, verflüssigt sich aber schon bei relativ geringem Druck (3-8 bar, je nach Zusammensetzung). Mit steigender Temperatur steigt der Dampfdruck, d.h. das Druckniveau unterhalb dessen das Autogas beginnt vom flüssigen in den gasförmigen Zustand überzugehen, steigt mit der Temperatur.

Bei normalen Betrieb der Verbrennungskraftmaschine stellt diese Tatsache kein Problem dar, da der Einspritzdruck bei einer Kraftstoffdirekteinspritzung typischerweise im Bereich von 50-200 bar liegt und somit weit höher als der Dampfdruck des Autogases. Wird ein mit einem solchen System ausgestattetes Kraftfahrzeug allerdings abgestellt, wird die Hochdruckseite des Kraftstoffkreislaufes entspannt und der Druck in dem Kraftstoffhochdruckspeicher fällt. Bei einer, durch längere Zeit mit hoher Last betriebenen Verbrennungskraftmaschine können sehr hohe Temperaturen in dem Kraftstoffhochdruckspeicher auftreten. Das noch in dem Kraftstoffhochdruckspeicher in flüssiger Form vorliegende Autogas wird gasförmig und somit bilden sich Dampfblasen.

Die kritische Temperatur von Autogas kann auch im normalen Betrieb, d.h. nicht nach dem oben beschriebenen Abstellvorgang, sondern während des laufenden Betriebes der Verbrennungskraftmaschine überschritten werden und dann hilft auch keine Druckerhöhung mehr und es werden sich ebenfalls Dampfblasen bilden. Aufgrund der Dampfblasen wird bei einem Neu-Start der Verbrennungskraftmaschine die eingespritzte Menge an Kraftstoff nicht der gewünschten Menge entsprechen, da zumindest teilweise gasförmiger Kraftstoff anstelle flüssigem Kraftstoff abgesetzt wird, was zu einer Beeinträchtigung des Fahrkomforts, der Leistung und der Abgasemissionen führen kann. Weiterhin kann es zu Problemen bei der Druckregelung kommen.

In der EP 1 541 858 A1 ist ein Verfahren zum Steuern der Kraftstoffzufuhr einer mit Flüssiggas als Kraftstoff betriebenen Verbrennungskraftmaschine beschrieben, wobei das Flüssiggas mittels einer Niederdruckkraftstoffpumpe und einer dieser Pumpe nachgeschalteten Hochdruckkraftstoffpumpe von einem, das Flüssiggas beinhaltenden Vorratsbehälter zu einem Hochdruckkraftstoffspeicher gefördert wird. Der Hochdruckkraftstoffspeicher steht in Fließverbindung mit einzelnen, den jeweiligen Zylindern der Verbrennungskraftmaschine zugeordneten Kraftstoffinjektoren, so dass bei Bedarf Flüssiggas direkt in Brennräume der Zylinder eingespritzt wird. Der Kraftstoffdruck wird in dem Hochdruckkraftstoffspeicher erfasst und bei Überschreiten von vorgegebenen Grenzwerten für den Kraftstoffdruck wird eine, den Hochdruckkraftstoffspeicher mit dem Vorratsbehälter verbindende Rückführleitung mittels eines elektrisch ansteuerbaren Absperrventils geöffnet, so dass zumindest ein Teilstrom des Flüssiggases als Spülstrom durch den Hochdruckkraftstoffspeicher zurück zu dem Vorratsbehälter fließt.

Das Dokument DE 10 2008 054 191 A1 offenbart eine Vorrichtung zum Betreiben einer Verbrennungskraftmaschine eines Fahrzeugs mit Kraftstoffdirekteinspritzung in den Zylinderbrennraum. Es ist eine Flüssiggas-Zuleitungssteuereinheit vorgesehen, nach deren Maßgabe entweder ein Normaldruck-Flüssigkraftstoff oder Flüssiggas über eine Kraftstoffrail mittels einer fahrzeugeigenen Hochdruckpumpe zu den Hochdruckinjektoren für die Kraftstoffdirekteinspritzung förderbar ist. Die Flüssiggas-Zuleitungssteuereinheit ist dazu ausgebildet, bei einem ins besonderen kurzzeitigen Umschalten der Vorrichtung auf einen Betrieb mit Normaldruck-Flüssigkraftstoff während einer vorgegeben Zeit durch Ansteuern eines Ventilmittels ein Öffnen der Kraftstoffrail zu veranlassen und weiterhin durch Ansteuern eines Fördermittels für den Normaldruck-Flüssigkraftstoff über die Kraftstoffrail zumindest die Hochdruckpumpe entgegen dem Flüssiggasdruck mit dem Normaldruck-Flüssigkraftstoff zu spülen. Zusätzlich oder alternativ ist an dem Ansaugkrümmer der Verbrennungskraftmaschine wenigstens eine Einspritzeinrichtung für ein zu verdampfendes Fluid vorgesehen und mit einem Fluidbehälter über ein entsprechendes Fördermittel verbunden, welches durch die Flüssiggaszuleitungssteuereinheit ansteuerbar ist, um das Fluid in den Ansaugkrümmer einzuspritzen.

In der DE 10 2010 053 695 A1 ist eine Autogas-(LPG-) Kraftstoffanordnung mit Strömungssteuerung beschrieben. Ein in dieser Kraftstoffanordnung vorhandener Kraftstoffverteiler kann einen Einlass in Kommunikation mit einer Quelle per Druck beaufschlagten LPG-Kraftstoff, einen Injektionsdurchgang in Kommunikation mit dem Einlass und einen Kraftstoffinjektor, der Kraftstoff an einen Brennraum eines Motors liefert, und einen Auslass in Kommunikation mit dem Kraftstoffinjektionsdurchgang aufweisen. Der Strömungssteuermechanismus kann in Kommunikation mit dem Auslass des Kraftstoffverteilers und einem LPG-Kraftstofftank stehen und kann in dem ersten und zweiten Modus betreibbar sein. Der zweite Modus kann eine größere Strömungsbeschränkung bereitstellen, als der erste Modus, um eine Kraftstoffströmung von dem Auslass des Kraftstoffverteilers zu dem Kraftstofftank zu steuern.

Der Erfindung liegt die Aufgabe zugrunde, ein Verfahren für eine mit Kraftstoffdirekteinspritzung und Flüssiggas als Kraftstoff arbeitenden Verbrennungskraftmaschine anzugeben, das einen zuverlässigen Betrieb der Verbrennungskraftmaschine ermöglicht.

Diese Aufgabe wird gelöst durch die Merkmale des unabhängigen Patentanspruches.

Die Erfindung zeichnet sich aus durch ein Verfahren zum Steuern der Kraftstoffzufuhr einer wahlweise mit Flüssiggas oder mit einem, bei Atmosphärendruck und Raumtemperatur flüssigen Kraftstoff betriebenen Verbrennungskraftmaschine, wobei das Flüssiggas mittels einer ersten Niederdruckkraftstoffpumpe von einem, das Flüssiggas beinhaltenden, ersten Vorratsbehälter zu einer Hochdruckkraftstoffpumpe gefördert wird, der bei Atmosphärendruck und Raumtemperatur flüssige Kraftstoff mittels einer zweiten Niederdruckkraftstoffpumpe von einem, den bei Atmosphärendruck und Raumtemperatur flüssigen Kraftstoff beinhaltenden, zweiten Vorratsbehälter zu der einen Hochdruckkraftstoffpumpe gefördert wird, die Hochdruckkraftstoffpumpe abhängig von der Stellung einer Schalteinrichtung entweder das Flüssiggas oder den bei Atmosphärendruck und Raumtemperatur flüssigen Kraftstoff zu einem Hochdruckkraftstoffspeicher fördert, der in Wirkverbindung mit einzelnen, den jeweiligen Zylindern der Verbrennungskraftmaschine zugeordneten Kraftstoffinjektoren steht, so dass bei Bedarf entweder das Flüssiggas oder der bei Atmosphärendruck und Raumtemperatur flüssige Kraftstoff direkt in Brennräume der Zylinder eingespritzt wird. Bei Betrieb der Verbrennungskraftmaschine mit dem Flüssiggas als Kraftstoff wird der Kraftstoffdruck und/oder die Kraftstofftemperatur in dem Hochdruckkraftstoffspeicher erfasst wird und bei Überschreiten von vorgegebenen Grenzwerten für den Kraftstoffdruck und/oder der Kraftstofftemperatur eine, den Hochdruckkraftstoffspeicher mit dem zweiten Vorratsbehälter verbindende Rückführleitung mittels eines elektrisch ansteuerbaren Ventiles geöffnet, so dass zumindest ein Teilstrom des Flüssiggases als Spülstrom durch den Hochdruckkraftstoffspeicher zu dem zweiten Vorratsbehälter fließt.

Dem beschriebenen Verfahren liegt die Erkenntnis zugrunde, dass durch Spülen des Hochdruckkraftstoffspeichers mit kühlem Flüssiggas aus dem Vorratsbehälter die dort vorhandenen, aufgrund bestimmter Betriebsbedingungen der Verbrennungskraftmaschine auftretenden Dampfblasen des an sich flüssigen Gases entfernen und zugleich die Temperatur im Kraftstoffhochdruckspeicher gesenkt werden kann. Das hat den Vorteil, dass ein sicherer Betrieb der Verbrennungskraftmaschine, insbesondere bei einem Heißstart der Verbrennungskraftmaschine oder bei einem Stop and Go Betrieb in einer Stausituation gewährleistet wird.

Durch die Einleitung des Spülstrome in den Vorratsbehälter für den bei Atmosphärendruck und Raumtemperatur flüssigen Kraftstoff wird der Spülvorgang begünstigt, da in diesem Vorratsbehälter ein gegenüber dem Druck in dem Vorratsbehälter für das Flüssiggas geringerer Druck herrscht und sich die Gasblasen in diesem Kraftstoff auflösen können.

Gemäß einem Ausführungsbeispiel wird der Durchfluss des Flüssiggases in der Rückführleitung mittels einer Drossel oder einer Blende auf einen vorgegebenen Wert reduziert. So kann auf einfache Weise der Durchfluss und damit der Spülstrom auf einen definierten Wert eingestellt werden.

Gemäß einem weiteren Ausführungsbeispiel wird nach einer vorgegebenen Zeitdauer die Rückführleitung mittels des Absperrventils wieder geschlossen und die Hochdruckkraftstoffpumpe eingeschaltet. Auf diese Weise kann sich schnell in dem Hochdruckkraftstoffspeicher ein zum Starten der Verbrennungskraftmaschine benötigter Hochdruck aufbauen, Gemäß einem weiteren Ausführungsbeispiel wird die Zeitdauer abhängig von der Kraftstofftemperatur und/oder dem Kraftstoffdruck im Hochdruckkraftstoffspeicher gewählt. Dadurch ergeben sich Zeitdauern, die dem jeweiligen Betriebszustand der Verbrennungskraftmaschine angepasst sind und unnötig lange Spülzeiten können vermieden werden.
Ausführungsbeispiele der Erfindung sind im Folgenden anhand der schematischen Zeichnungen näher erläutert. Es zeigen
Figur 1 den prinzipiellen Aufbau eines Kraftstoffzuführsystems für eine monovalent mit Flüssiggas betriebene Verbrennungskraftmaschine,
Figur 2 ein Ablaufdiagramm eines Programmes zum Steuern des Kraftstoffzufuhrsystems und
Figur 3 den prinzipiellen Aufbau eines erfindungsgemäßen Kraftstoffzufuhrsystems für eine bivalent mit Flüssiggas oder mit herkömmlichen Kraftstoffen betriebene Verbrennungskraftmaschine.

Elemente gleicher Konstruktion und/oder Funktion sind figurenübergreifend mit den gleichen Bezugszeichen versehen.

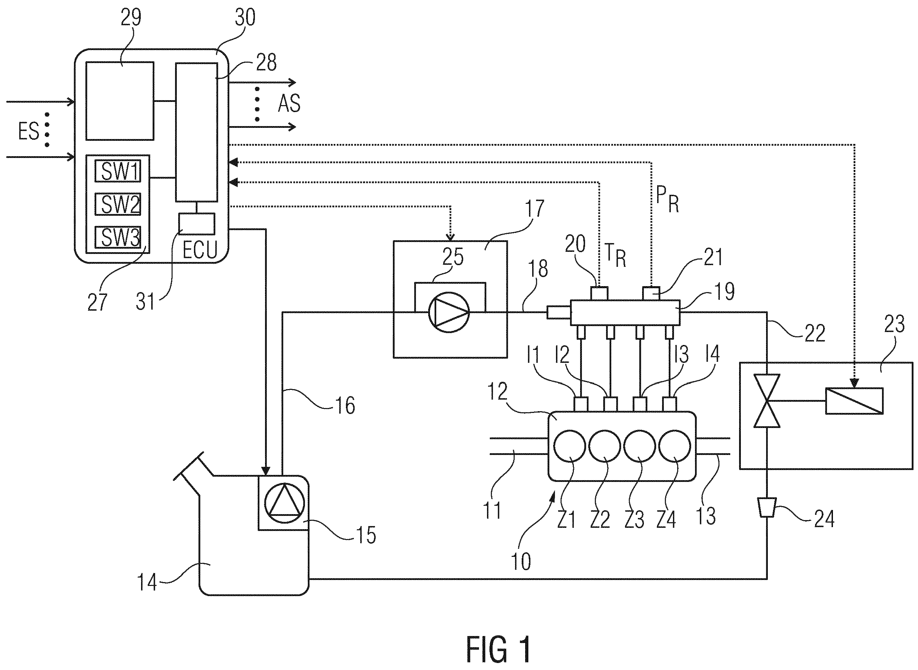

In der Figur 1 ist in schematischer Darstellung das Kraftstoffzuführsystem für eine ausschließlich mit Flüssiggas und Direkteinspritzung betriebene Verbrennungskraftmaschine gezeigt. Dies wird auch als monovalenter Betrieb bezeichnet. Dabei sind nur diejenigen Komponenten dargestellt, die für das Verständnis der Erfindung notwendig sind. Insbesondere sind Elemente zur Regelung des Gasdrucks wie Druckregler, Sicherheitsventile usw. aus Übersichtlichkeitsgründen weggelassen.

Elemente gleicher Konstruktion und Funktion sind figurenübergreifend mit den gleichen Bezugszeichen versehen.

Die Verbrennungskraftmaschine 10 (Figur 1) umfasst einen Ansaugtrakt 11, einen Motorblock 12 und einen Abgastrakt 13. Der Motorblock umfasst mehrere Zylinder Z1, Z2, Z3, Z4. Jedem der Zylinder Z1 bis Z4 ist ein eigener Kraftstoffinjektor I1, 12, 13, 14 zugeordnet, so dass durch entsprechende Ansteuerung mittels Signalen einer Steuerungseinrichtung 30 Flüssiggas als Kraftstoff direkt in die einzelnen Brennräume der Zylinder Z1 bis Z4 eingespritzt werden kann (Kraftstoff-Direkteinspritzung). Die Kraftstoffinjektoren I1, I2, I3, I4 können dabei entweder einen Solenoidantrieb oder einen Piezoantrieb aufweisen.

Das Kraftstoffzuführsystem der Verbrennungskraftmaschine 10 umfasst einen Vorratsbehälter 14 für das Flüssiggas. Als Flüssiggas kommt dabei das sogenannte Autogas, auch als LPG (Liquefied Petroleum Gas) bezeichnet, zum Einsatz. Das Autogas ist mit einem Druck von etwa 5-25 bar in dem Vorratsbehälter 14 gespeichert und wird mittels einer elektrischen Niederdruckkraftstoffpumpe 15 über eine Niederdruckkraftstoffleitung 16 zu einem nicht näher bezeichneten Zulauf einer elektrischen Hochdruckkraftstoffpumpe 17 gefördert. In diesem Beispiel ist die Niederdruckkraftstoffpumpe 15 innerhalb des Vorratsbehälters 14 angeordnet (Intank-Pumpe), sie kann aber auch in der Niederdruckkraftstoffleitung 16 angeordnet sein.

Die Niederdruckkraftstoffpumpe 15 ist vorzugsweise so ausgelegt, dass sie während des Betriebs immer eine so hohe Kraftstoffmenge liefert, dass der vorgegebene Niederdruck nicht unterschritten wird und sich am Eingang der Hochdruckpumpe 17 keine Dampfblasen bilden.
Die Hochdruckkraftstoffpumpe 17 erhöht den Druck innerhalb des Kraftstoffzuführsystems und fördert das Flüssiggas über eine Hochdruckkraftstoffleitung 18 zu einem Hochdruckkraftstoffspeicher 19. Der Hochdruckkraftstoffspeicher 19 wird auch als Kraftstoffverteilerleiste, als common rail oder vereinfacht nur als rail bezeichnet.

Die Hochdruckkraftstoffpumpe 17 weist eine Bypassleitung oder ein Bypassventil 25 auf, so dass auch bei abgeschalteter Hochdruckkraftstoffpumpe 17 ein Kraftstofffluss zu dem Hochdruckkraftstoffspeicher 19 möglich ist. Abhängig von der Bauart der Hochdruckkraftstoffpumpe 17 kann ein solcher Kraftstofffluss auch durch die natürliche Leckage der Hochdruckkraftstoffpumpe 17 erreicht werden.

Die Kraftstoffinjektoren I1 bis 14 sind mit dem Hochdruckkraftstoffspeicher 19 wirkverbunden. Das Flüssiggas wird somit bei Bedarf den Kraftstoffinjektoren I1 bis 14 über den Hochdruckkraftstoffspeicher 19 zugeführt.

An dem oder in dem Hochdruckkraftstoffspeicher 19 sind ein Temperatursensor 20 und ein Drucksensor 21 angeordnet, welche ein der Temperatur bzw. des Druckes des Flüssiggases im Hochdruckkraftstoffspeicher 19 entsprechendes Signal T_{R} bzw. p_{R} an die Steuerungseinrichtung 30 abgeben.

Vom Hochdruckkraftstoffspeicher 19 führt eine Rückführleitung 22 zurück in den Vorratsbehälter 14. In der Rückführleitung 22, die auch als Spülleitung bezeichnet werden kann, ist ein mittels Signalen der Steuerungseinrichtung 30 elektrisch ansteuerbares Absperrventil 23 eingeschaltet. Mit Hilfe dieses Absperrventiles 23, das in bevorzugter Weise als einfaches Ein/Aus-Ventil ausgestaltet ist, kann die Rückführleitung 22 verschlossen oder geöffnet werden, so dass bei Bedarf ein Spülen des Hochdruckkraftstoffspeicher 19 möglich ist. Stromabwärts des Absperrventiles 23 ist eine Drossel oder eine Blende 24 eingeschaltet, um bei geöffnetem Absperrventil 23 den Durchfluss von Flüssiggas zu reduzieren und auf einen definierten Wert zu realisieren. Alternativ hierzu kann das Absperrventil 23 so ausgestaltet sein, dass es bereits als Drossel oder Blende wirkt.

Zum Steuern und Regeln der Verbrennungskraftmaschine 10 dient die Steuerungseinrichtung (ECU, Electronic Control Unit) 30, der neben den Signalen der erwähnten Sensoren weitere, für den Betrieb der Verbrennungskraftmaschine 10 nötige Sensoren zugeordnet sind, deren Signale in der Figur 1 allgemein mit dem Bezugszeichen ES bezeichnet sind.

Die Sensoren erfassen verschiedene Messgrößen und ermitteln jeweils den Messwert der Messgröße. Die Steuerungseinrichtung 30 ermittelt abhängig von mindestens einer der Messgrößen Stellgrößen, die dann in ein oder mehrere Stellsignale zum Steuern von Stellgliedern mittels entsprechender Stellantriebe umgesetzt werden.

Die Stellglieder sind beispielsweise eine Drosselklappe im Ansaugtrakt 11, die Kraftstoffinjektoren I1 bis 14, die Niederdruckkraftstoffpumpe 15, die Hochdruckkraftstoffpumpe 17 und das Absperrventil 23. Weitere Ausgangssignale für weitere Stellglieder, die zum Betreiben der Verbrennungskraftmaschine 10 nötig, aber nicht explizit dargestellt sind, sind in der Figur 1 allgemein mit dem Bezugszeichen AS gekennzeichnet.

Solche elektronischen Steuerungseinrichtungen 30, die in der Regel einen oder mehrere Mikroprozessoren beinhalten und die neben der Kraftstoffeinspritzung und der Zündungsregelung bei einer Otto-Verbrennungskraftmaschine noch eine Vielzahl weitere Steuer- und Regelaufgaben durchführen, sind an sich bekannt, sodass im Folgenden nur auf den im Zusammenhang mit der Erfindung relevanten Aufbau und dessen Funktionsweise eingegangen wird.

Die Steuerungseinrichtung 30 umfasst bevorzugt eine Recheneinheit (Prozessor) 28, die mit einem Programmspeicher 29 und einem Wertespeicher (Datenspeicher) 27 gekoppelt ist. In dem Programmspeicher 29 und dem Wertespeicher 27 sind Programme bzw. Werte gespeichert, die für den Betrieb der Verbrennungskraftmaschine 10 nötig sind. Unter anderem ist in dem Programmspeicher 29 softwaremäßig eine kennfeldbasierte Funktion zum Spülen des Kraftstoffhochdrucksystems implementiert, wie im Folgenden noch näher erläutert wird. In dem Wertespeicher 27 ist u.a. ein Schwellenwert SW1 für den Kraftstoffdruck p_{R}, ein Schwellenwert SW2 für die Kraftstofftemperatur T_{R} und ein Schwellenwert für eine Zeitspanne SW3 oder ein maximaler Zählerwert eines Zeitzählers 31 abgelegt.

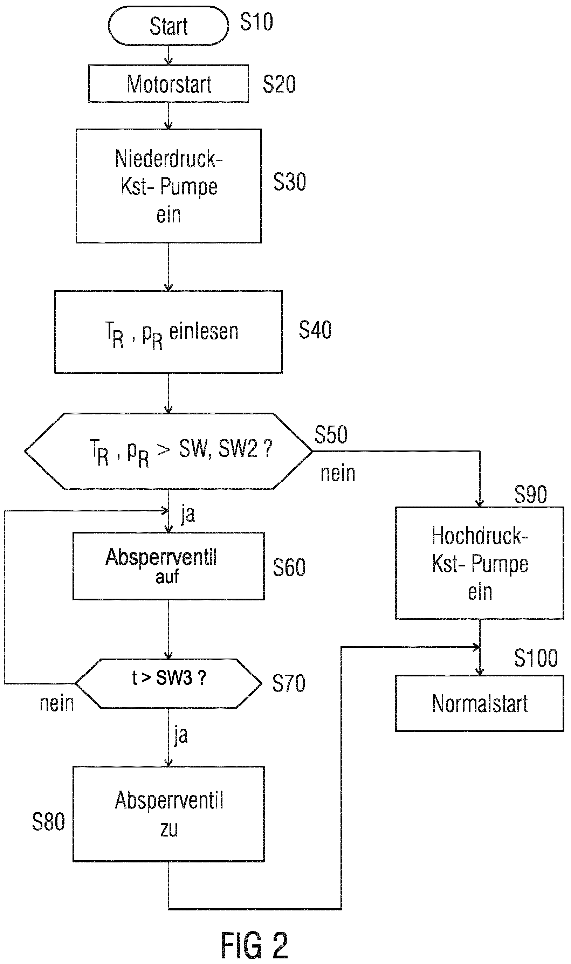

Das Verfahren zum Spülen des Kraftstoffhochdrucksystems wird anhand des Ablaufdiagrammes gemäß Figur 2 näher erläutert.

Das Programm wird in einem Schritt S10 gestartet, in dem eventuell Variablen initialisiert werden können. Wird in einem Schritt S20 erkannt, dass ein Start der Verbrennungskraftmaschine 10 erfolgen soll, zum Beispiel durch Auswerten der Stellung eines Zünd-Anlassschalters oder einer Starttaste, so wird in einem nachfolgenden Schritt S30 die Niederdruckkraftstoffpumpe 15 mittels elektrischer Signale der Steuerungseinrichtung 30 aktiviert. Dadurch wird Kraftstoff aus dem Vorratsbehälter 14 (Tank) mit einem Überdruck, bezogen auf den Tankdruck von beispielsweise 5-8 bar zur Hochdruckkraftstoffpumpe 17 gefördert.

Da es sich bei dem im Schritt S20 erkannten Start der Verbrennungskraftmaschine 10 um einen sogenannten Heißstart handelt könnte, d.h. einem Wiederstart nach einer relativ kurzen Abstellphase einer bereits betriebswarmen Verbrennungskraftmaschine 10 und damit verbunden einer möglichen Dampfblasenbildung im Hochdruckkraftstoffspeicher 19, werden in einem Schritt 40 die Werte für die Temperatur TR und/oder den Druck pR mittels der Sensoren 20, 21 in einem Schritt S40 erfasst. In einem Schritt S50 werden diese Werte TR, pR mit zugehörigen Schwellenwerten SW1, SW2 verglichen. Liegt mindestens einer der erfassten Werte TR, pR oberhalb des zugehörigen Schwellenwertes SW1, SW2, so wird auf einen Heißstart der Verbrennungskraftmaschine 10 geschlossen und in einem nachfolgenden Schritt S60 mittels elektrischer Signale der Steuerungseinrichtung 30 das Absperrventil 23 in der Rückführleitung 22 geöffnet. Zeitgleich wird ein in der Steuerungseinrichtung 30 vorhandener Zeitzähler 31 gestartet.

Auf einen Heißstart der Verbrennungskraftmaschine 10 kann auch durch Auswerten eines sogenannten engine-stop-Signals in Verbindung mit der Erfassung der Abstelldauer und der Kühlmitteltemperatur beim Wiederstart geschlossen werden.

Vorsorglich kann der Schritt S40 auch durchgeführt werden, wenn Kriterien erfüllt sind, die auf einen möglichen Start der Verbrennungskraftmaschine 10 hinweisen, beispielsweise nur die Stellung "Zündung an" des Zünd-Anlassschalters. Damit kann ein Zeitvorteil erreicht werden.

Durch die bereits laufende Niederdruckkraftstoffpumpe 16 kann nun über das Bypassventil 25, bzw. über die Leckage der abgeschalteten Hochdruckkraftstoffpumpe 17 der Hochdruckkraftstoffspeicher 19 mit kaltem Flüssiggas aus dem Vorratsbehälter 14 gespült werden. Der aufgrund der hohen Temperatur und/oder hohen Druckes in dem Hochdruckkraftstoffspeicher 19 vorhandene gasförmige Kraftstoff kann über die als Spülleitung dienende Rückführleitung 22 zurück in den Vorratsbehälter 14 fließen. Dadurch werden zum einen die Gasblasen aus dem Hochdruckkraftstoffspeicher 19 entlüftet, bzw. gespült und zum anderen wird relativ kaltes Flüssiggas aus dem Vorratsbehälter 14 zum Hochdruckkraftstoffspeicher 19 gepumpt, wodurch die Temperatur im Hochdruckkraftstoffspeicher 19 sinkt und damit das Erhitzen des Flüssiggases gestoppt werden kann.

In einem Schritt S70 wird abgefragt, ob eine vorbestimmte Zeitspanne t, auch als Spülzeit bezeichnet, seit Öffnungsbeginn des Absperrventils 23 abgelaufen ist, die Zeitspanne t also einen vorgegeben Schwellenwert SW3 überschritten hat. Ist das nicht der Fall, so wird das Verfahren in dem Schritt S60 fortgesetzt, andernfalls wird in einem Schritt S80 mittels Signale der Steuerungseinrichtung 30 das Absperrventil 23 wieder geschlossen. Nach Ablauf der Zeitspanne t kann sichergestellt sein, dass kein gasförmiger Kraftstoff mehr im Hochdruckkraftstoffspeicher 19 mehr vorhanden ist und der Start der Verbrennungskraftmaschine 10 kann auf herkömmliche Weise erfolgen, d.h. der Durchfluss durch die Hochdruckkraftstoffpumpe 17 freigegeben und auch die Kraftstoffinjektoren I1 bis 14 geben zu den berechneten Öffnungszeiten die Einspritzung des Kraftstoffes frei. Dies erfolgt in dem Schritt S100 und wird als Normalstart bezeichnet. Ist die Hochdruckpumpe 17 fest mit der Verbrennungskraftmaschine 10, beispielsweise über eine Nockenwelle verbunden, kann erst gestartet werden, wenn die Bedingungen für die Temperatur T_{R} und die Spülzeit t erfüllt sind.

Sollten die Schwellenwerte SW1, SW2 für die Temperatur T_{R} und den Druck p_{R} schon wieder unterschritten werden, bevor die Zeitspanne t abgelaufen ist, so wird das Absperrventil 23 schon dann geöffnet und das Verfahren in der oben beschriebenen Weise fortgesetzt.

Ergibt die Abfrage in Schritt S50, dass mindestens ein Messwert der Messgrößen Temperatur T_{R}, und Druck p_{R} im Hochdruckkraftstoffspeicher 19 unterhalb des jeweiligen Schwellenwertes SW1, SW2 liegt, so kann davon ausgegangen werden, dass keine. Dampfblasenbildung im Hochdruckkraftstoffspeicher 19 vorliegt, ein Spülen also nicht erforderlich ist und das Verfahren wird unmittelbar mit den Schritten S90 und S100 fortgesetzt.

Werte für die Zeitdauer t sind dabei bevorzugt in Abhängigkeit der Temperatur T_{R} im Hochdruckkraftstoffspeicher 19 gewählt und sind in Form eines Kennfeldes in dem Wertespeicher 27 der Steuerungseinrichtung 30 abgelegt. Um die Zeitdauer t noch genauer zu bestimmen, kann zusätzlich der Druck p_{R} im Hochdruckkraftstoffspeicher 19 berücksichtigt werden.

Wenn es die Temperaturbedingungen erfordern, kann das Absperrventil 23 auch im laufenden Betrieb der Verbrennungskraftmaschine 10 geöffnet werden, um die Temperatur T_{R} im Hochdruckkraftstoffspeicher 19 abzusenken. Dieser Fall kann beispielsweise bei einem sogenannten Stop and Go Betrieb in einer Stausituation des Fahrzeuges bei hohen Außentemperaturen auftreten. Durch das geöffnete Absperrventil 23 fließt zwar ein Teil des geförderten Kraftstoffes a, dafür wird aber der Hochdruckkraftstoffspeicher 19 mit kühlerem Kraftstoff versorgt und somit die Temperatur T_{R} erniedrigt.

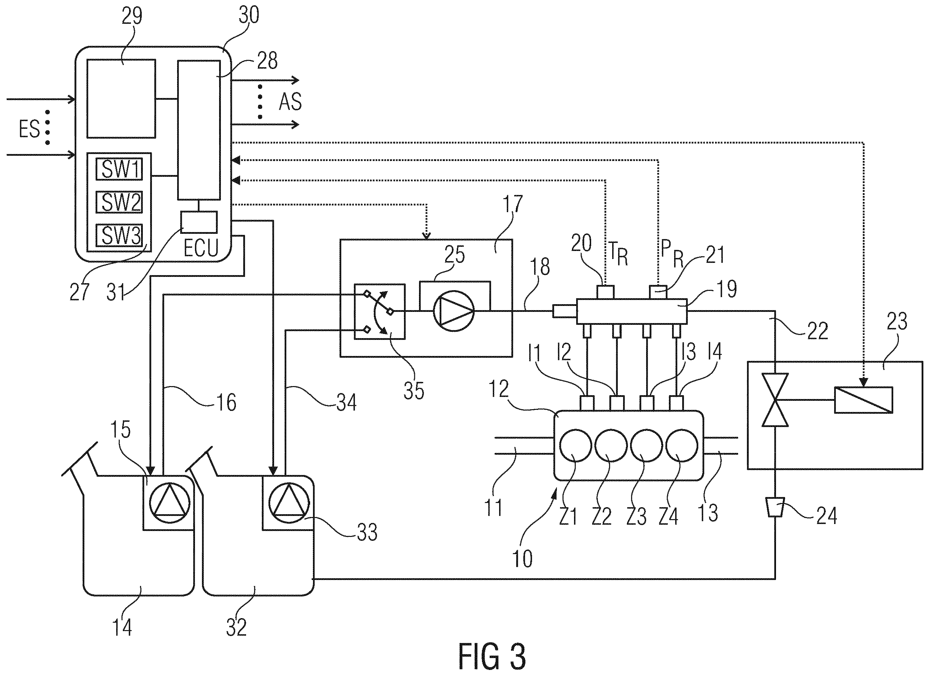

In der Figur 3 ist in schematischer Darstellung das Kraftstoffzuführsystem für eine bivalent wahlweise mit Flüssiggas oder mit herkömmlichen Kraftstoffen betriebene Verbrennungskraftmaschine gezeigt.

Dabei sind wie in Fig. 1 auch nur diejenigen Komponenten dargestellt, die für das Verständnis der Erfindung notwendig sind. Insbesondere sind Elemente zur Regelung des Gasdrucks wie Druckregler, Sicherheitsventile usw. aus Übersichtlichkeitsgründen weggelassen.

Im Unterschied zu der in Figur 1 dargestellten Konfiguration ist für die zweite Kraftstoffart, nämlich ein bei Atmosphärendruck und Raumtemperatur flüssiger Kraftstoff, in der Regel Otto-Kraftstoff, ein zusätzlicher Vorratsbehälter 32 vorgesehen. Eine in diesem Vorratsbehälter 32 angeordnete Niederdruckraftstoffpumpe 33 für diese zweite Kraftstoffart fördert den Kraftstoff über eine Niederdruckkraftstoffleitung 34 ebenfalls zu der einen Hochdruckkraftstoffpumpe 17. Diese Niederdruckkraftstoffleitung 34 führt aber nicht unmittelbar zum Einlass der Hochdruckkraftstoffpumpe 17, sondern zu einer, dem Einlass vorgeschalteten Umschalteinrichtung 35. An diese Umschalteinrichtung 35 ist ebenfalls die Niederdruckkraftstoffleitung 16 des Flüssiggas-Kraftstoffkreislaufes geführt, so dass abhängig von der Schaltstellung der Umschalteinrichtung 35 entweder Flüssiggas oder die zweite Kraftstoffart in den Kraftstoffhochdruckspeicher 19 gefördert wird. Die Betätigung der Umschalteinrichtung 35 erfolgt über Signale der Steuerungseinrichtung 30 und kann entweder vom Fahrzeugführer des mit der Verbrennungskraftmaschine angetriebenen Fahrzeuges initiiert werden, oder beispielsweise automatisch erfolgen, wenn der Füllstand eines der beiden Vorratsbehält einen vorgegebenen, minimalen Wert unterschreitet.

Der Vorgang des Spülens erfolgt bei dieser Anordnung in analoger Weise wie es anhand der Figur 1 erläutert wurde, mit dem Unterschied, dass die Rückführleitung 22 nicht in den Vorratsbehälter 14 des Flüssiggases mündet, sondern in den Vorratsbehälter 32 der zweiten Kraftstoffart, da hier ein niedrigerer Druck herrscht. Auf diese Weise wird das Spülen des Kraftstoffhochdruckspeichers 19 begünstigt und kann, sofern nötig, auch für die zweite Kraftstoffart genutzt werden. Das Einleiten von Flüssiggas in den Vorratsbehälter 32 der zweiten Kraftstoffart, insbesondere wenn diese Otto-Kraftstoff ist, stellt bis zu gewissen Mengen kein Problem dar, da sich das Gas in dem flüssigen Otto-Kraftstoff löst. Desweiteren ist in herkömmlicher Weise ein Kraftstoffverdunstungsrückhaltesystem mit einem Aktivkohlefilter (nicht dargestellt) vorhanden, welcher die Gasdämpfe aufnehmen kann. Desweiteren werden über das Kraftstoffverdunstungsrückhaltesystem zyklisch die Gasdämpfe in den Ansaugtrakt 11 eingeleitet und der Verbrennung zugeführt.

### Begriffs-/Bezugszeichenliste

- 10: Verbrennungskraftmaschine
- 11: Ansaugtrakt
- 12: Motorblock
- 13: Abgastrakt
- 14: Vorratsbehälter für Flüssiggas
- 15: Niederdruck-Kraftstoffpumpe für Flüssiggas
- 16: Niederdruck-Kraftstoffleitung für Flüssiggas
- 17: Hochdruck-Kraftstoffpumpe für Flüssiggas
- 18: Hochdruck-Kraftstoffleitung
- 19: Hochdruckkraftstoffspeicher, common rail
- 20: Kraftstofftemperatursensor
- 21: Kraftstoffdrucksensor
- 22: Rückführleitung, Spülleitung
- 23: Absperrventil
- 24: Blende, Drossel
- 25: Bypassventil, Leckage
- 26: Umschalteinrichtung
- 27: Wertespeicher, Datenspeicher
- 28: Recheneinheit, Prozessor
- 29: Programmspeicher
- 30: Steuerungseinrichtung, ECU
- 31: Zeitzähler
- 32: Vorratsbehälter für zweite Kraftstoffart
- 33: Niederdruck-Kraftstoffpumpe für zweite Kraftstoffart
- 34: Niederdruck-Kraftstoffleitung für zweite Kraftstoffart
- 35: Umschalteinrichtung

- Z1...Z4: Zylinder
- I1...I4: Kraftstoffinjektor
- T_{R}: Kraftstofftemperatur im Hochdruckkraftstoffspeicher
- p_{R}: Temperatur im Hochdruckkraftstoffspeicher
- ES: Eingangssignal
- AS: Ausgangssignal
- SW1-SW3: Schwellenwerte
- T: Zeitspanne

## Patentansprüche

1. Verfahren zum Steuern der Kraftstoffzufuhr einer wahlweise mit Flüssiggas oder mit einem, bei Atmosphärendruck und Raumtemperatur flüssigen Kraftstoff betriebenen Verbrennungskraftmaschine (10), wobei
- - das Flüssiggas mittels einer ersten Niederdruckkraftstoffpumpe (15) von einem, das Flüssiggas beinhaltenden, ersten Vorratsbehälter (14) zu einer Hochdruckkraftstoffpumpe (17) gefördert wird,
- - der bei Atmosphärendruck und Raumtemperatur flüssige Kraftstoff mittels einer zweiten Niederdruckkraftstoffpumpe (33) von einem, den bei Atmosphärendruck und Raumtemperatur flüssigen Kraftstoff beinhaltenden, zweiten Vorratsbehälter (32) zu der einen Hochdruckkraftstoffpumpe (17) gefördert wird,
- - die Hochdruckkraftstoffpumpe (17) abhängig von der Stellung einer Schalteinrichtung (35) entweder das Flüssiggas oder den bei Atmosphärendruck und Raumtemperatur flüssigen Kraftstoff zu einem Hochdruckkraftstoffspeicher (19) fördert, der in Wirkverbindung mit einzelnen, den jeweiligen Zylindern (Z1-Z4) der Verbrennungskraftmaschine (10) zugeordneten Kraftstoffinjektoren (11-14) steht, so dass bei Bedarf entweder das Flüssiggas oder der bei Atmosphärendruck und Raumtemperatur flüssige Kraftstoff direkt in Brennräume der Zylinder (Z1-Z4) eingespritzt wird,
- **dadurch gekennzeichnet, dass** bei Betrieb der Verbrennungskraftmaschine (10) mit dem Flüssiggas als Kraftstoff der Kraftstoffdruck (p_{R}) und/oder die Kraftstofftemperatur (T_{R}) in dem Hochdruckkraftstoffspeicher (19) erfasst wird und bei Überschreiten von vorgegebenen Grenzwerten für den Kraftstoffdruck (p_{R}) und/oder der Kraftstofftemperatur (T_{R}) eine, den Hochdruckkraftstoffspeicher (19) mit dem zweiten Vorratsbehälter (32) verbindende Rückführleitung (22) mittels eines elektrisch ansteuerbaren Absperrventiles (23) geöffnet wird, so dass zumindest ein Teilstrom des Flüssiggases als Spülstrom durch den Hochdruckkraftstoffspeicher (19) zu dem zweiten Vorratsbehälter (32) fließt.

2. Verfahren nach Anspruch 1, **dadurch gekennzeichnet, dass** vor dem Start der Verbrennungskraftmaschine (10) bei abgeschalteter Hochdruckkraftstoffpumpe (17) die erste Niederdruckkraftstoffpumpe (15) aktiviert wird und das Flüssiggas über ein Bypassventil (25) der Hochdruckkraftstoffpumpe (17) oder eine Leckage der Hochdruckkraftstoffpumpe (17) in den Hochdruckkraftstoffspeicher (19) und zurück in den, bei Atmosphärendruck und Raumtemperatur flüssigen Kraftstoff beinhaltenden, zweiten Vorratsbehälter (32) gefördert wird.

3. Verfahren nach einem der vorhergehenden Ansprüche, **dadurch gekennzeichnet, dass** der Durchfluss des Flüssiggases in der Rückführleitung (22) mittels einer Drossel (24) oder einer Blende auf einen vorgegebenen Wert reduziert wird

4. Verfahren nach einem der vorhergehenden Ansprüche, **dadurch gekennzeichnet, dass** nach einer vorgegebenen Zeitdauer (t) die Rückführleitung(22) mittels des Absperrventils (23) geschlossen und die Hochdruckkraftstoffpumpe (17) eingeschaltet wird, so dass sich in dem Hochdruckkraftstoffspeicher (19) ein zum Starten der Verbrennungskraftmaschine (10) benötigter Hochdruck aufbauen kann.

5. Verfahren nach Anspruch 4, **dadurch gekennzeichnet, dass** die Zeitdauer (t) abhängig von der Kraftstofftemperatur (T_{R}) und/oder dem Kraftstoffdruck (p_{R}) im Hochdruckkraftstoffspeicher (19) gewählt ist.

## Claims

1. Method for controlling the supply of fuel to an internal combustion engine (10) that can be operated selectively with liquefied gas or with a fuel that is liquid at atmospheric pressure and room temperature, wherein
- - the liquefied gas is delivered by means of a first low-pressure fuel pump (15) from a first reservoir (14), which contains the liquefied gas, to a high-pressure fuel pump (17),
- - the fuel that is liquid at atmospheric pressure and room temperature is delivered by means of a second low-pressure fuel pump (33) from a second reservoir (32), which contains the fuel that is liquid at atmospheric pressure and room temperature, to the one high-pressure fuel pump (17),
- - depending on the position of a switching device (35), the high-pressure fuel pump (17) delivers either the liquefied gas or the fuel that is liquid at atmospheric pressure and room temperature to a high-pressure fuel accumulator (19) which is operatively connected to individual fuel injectors (I1-I4) that are assigned to the respective cylinders (Z1-Z4) of the internal combustion engine (10) such that, as required, either the liquefied gas or the fuel that is liquid at atmospheric pressure and room temperature is injected directly into combustion chambers of the cylinders (Z1-Z4),
- **characterized in that**, during operation of the internal combustion engine (10) with the liquefied gas as fuel, the fuel pressure (p_{R}) and/or the fuel temperature (T_{R}) in the high-pressure fuel accumulator (19) is detected and, if predefined threshold values for the fuel pressure (p_{R}) and/or for the fuel temperature (T_{R}) are exceeded, a return line (22) that connects the high-pressure fuel accumulator (19) to the second reservoir (32) is opened by means of an electrically actuable shut-off valve (23) such that at least a partial stream of the liquefied gas flows, as a scavenging stream, through the high-pressure fuel accumulator (19) back to the second reservoir (32).

2. Method according to Claim 1, **characterized in that**, before the internal combustion engine (10) is started, with the high-pressure fuel pump (17) deactivated, the first low-pressure fuel pump (15) is activated and the liquefied gas is delivered via a bypass valve (25) of the high-pressure fuel pump (17), or a leakage of the high-pressure fuel pump (17), into the high-pressure fuel accumulator (19) and back into the second reservoir (32) that contains the fuel that is liquid at atmospheric pressure and room temperature.

3. Method according to one of the preceding claims, **characterized in that** the flow of the liquefied gas through the return line (22) is reduced to a predefined value by means of a throttle (24) or an orifice.

4. Method according to one of the preceding claims, **characterized in that**, after a predefined time period (t), the return line (22) is closed by means of the shut-off valve (23) and the high-pressure fuel pump (17) is activated such that a high pressure required for the starting of the internal combustion engine (10) can build up in the high-pressure fuel accumulator (19).

5. Method according to Claim 4, **characterized in that** the time period (t) is selected in a manner dependent on the fuel temperature (T_{R}) and/or the fuel pressure (p_{R}) in the high-pressure fuel accumulator (19).

## Revendications

1. Procédé de commande de l'amenée de carburant à un moteur à combustion interne (10) fonctionnant de manière sélective avec du gaz liquéfié ou avec un carburant liquide à la pression atmosphérique et à la température ambiante, dans lequel
- le gaz liquéfié est refoulé au moyen d'une première pompe de carburant basse pression (15) depuis un premier réservoir (14) contenant le gaz liquéfié, jusqu'à une pompe de carburant haute pression (17),
- le carburant liquide à la pression atmosphérique et à la température ambiante est refoulé au moyen d'une deuxième pompe de carburant basse pression (33) depuis un deuxième réservoir (32) contenant le carburant liquide à la pression atmosphérique et à la température ambiante, jusqu'à la pompe de carburant haute pression (17),
- la pompe de carburant haute pression (17), en fonction de la position d'un dispositif de commutation (35), refoule soit le gaz liquéfié soit le carburant liquide à la pression atmosphérique et à la température ambiante, jusqu'à un accumulateur de carburant haute pression (19) qui est en liaison fonctionnelle avec des injecteurs de carburant individuels (I1-I4) associés aux cylindres respectifs (Z1-Z4) du moteur à combustion interne (10), de telle sorte qu'au besoin, soit le gaz liquéfié soit le carburant liquide à la pression atmosphérique et à la température ambiante soit injecté directement dans les chambres de combustion des cylindres (Z1-Z4),
**caractérisé en ce que** pendant le fonctionnement du moteur à combustion interne (10) avec le gaz liquéfié en tant que carburant, la pression de carburant (p_{R}) et/ou la température de carburant (T_{R}) dans l'accumulateur de carburant haute pression (19) sont détectées et en cas de dépassement de valeurs limites prédéfinies pour la pression de carburant (p_{R}) et/ou pour la température de carburant (T_{R}), une conduite de retour (22) reliant l'accumulateur de carburant haute pression (19) au deuxième réservoir (32) est ouverte au moyen d'une soupape d'arrêt (23) à commande électrique, de sorte qu'au moins un courant partiel de gaz liquéfié en tant que courant de rinçage s'écoule à travers l'accumulateur de carburant haute pression (19) jusqu'au deuxième réservoir (32).

2. Procédé selon la revendication 1, **caractérisé en ce qu'**avant le démarrage du moteur à combustion interne (10), lorsque la pompe de carburant haute pression (17) est coupée, la première pompe de carburant basse pression (15) est activée et le gaz liquéfié est refoulé par le biais d'une soupape de dérivation (25) de la pompe de carburant haute pression (17) ou une fuite de la pompe de carburant haute pression (17) est refoulée dans l'accumulateur de carburant haute pression (19) pour revenir dans le deuxième réservoir (32) contenant le carburant liquide à la pression atmosphérique et à la température ambiante.

3. Procédé selon l'une quelconque des revendications précédentes, **caractérisé en ce que** le débit de gaz liquéfié dans la conduite de retour (22) est réduit à une valeur prédéfinie au moyen d'un étranglement (24) ou d'un diaphragme.

4. Procédé selon l'une quelconque des revendications précédentes, **caractérisé en ce qu'**après une durée prédéfinie (t), la conduite de retour (22) est fermée au moyen de la soupape d'arrêt (23) et la pompe de carburant haute pression (17) est mise en route de sorte qu'une haute pression nécessaire pour le démarrage du moteur à combustion interne (10) puisse s'établir dans l'accumulateur de carburant haute pression (19).

5. Procédé selon la revendication 4, **caractérisé en ce que** la durée (t) est sélectionnée en fonction de la température de carburant (T_{R}) et/ou de la pression de carburant (p_{R}) dans l'accumulateur de carburant haute pression (19).
